# EUROPEAN PATENT APPLICATION

(11) **EP 4 831 986 A1**
(43) Date of publication of application: **28.10.2026**
(21) Application number: 25224428.0
(22) Date of filing: 17.12.2025
(51) Int. Cl.: G10L 15/16, G06N 3/0455

(54) **AUDIO AND VIDEO TOKENIZATION FOR MULTIMODAL LARGE LANGUAGE MODELS**

(30) Priority: 22.04.2025 US 202563792505 P; 10.12.2025 US 202519414835
(71) Applicant: INTEL Corporation, Santa Clara, CA 95054 (US)
(72) Inventor: LOPATKA, Kuba, 80288 Gdansk (PL); SZMELCZYNSKI, Tomasz, 80-298 Gdansk (PL); KUPRYJANOW, Adam, 80-298 Gdansk (PL)
(74) Representative: Viering, Jentschura & Partner mbB Patent- und Rechtsanwälte

(57) **Abstract**

Systems and methods for power-efficient, continuous tokenization and long-context storage of audio and video data for use with multimodal large language models (LLMs). The systems include specialized subsystems configured to receive input signals, generate discrete tokens representing the input, and buffer the tokens for durations ranging from seconds to hours. Upon receiving a trigger to initiate communication with a multimodal LLM, at least a subset of the buffered tokens is transmitted to an inference dispatcher, which determines the distribution of the tokens to one or more inference engines for processing. The architecture supports tokenization and buffering for multiple modalities, including audio, video, image, and text, and enables context-rich, privacy-preserving, and low-latency Al interactions on client devices. By utilizing efficient token-based data encoding and performing the tokenization at low-power hardware, power consumption and bandwidth usage are significantly reduced, thereby allowing seamless, always-on multimodal Al experiences on battery-powered platforms.

## Description

### This Cross-Reference to Priority Application

This application claims the benefit of U.S. Provisional Patent Application No. 63/792,505, filed April 22, 2025, entitled "AUDIO AND VIDEO TOKENIZATION FOR MULTIMODAL LARGE LANGUAGE MODELS", which is incorporated by reference in its entirety for all purposes.

### Technical Field

This disclosure relates generally to deep learning, and more specifically, power efficient audio and video tokenization for multimodal large language models.

### Background

The last decade has witnessed a rapid rise in Al (artificial intelligence) based data processing, including advances in large language models (LLMs) designed to understand and generate human language. Large language models can be implemented using a deep learning system, such as a neural network having many layers. LLMs can be configured to understand and answer user questions and/or understand instructions and perform various tasks, and LLMs can analyze both audio and image input. However, continuous analysis of audio is power hungry. Additionally, LLMs use a large amount of compute power, often consuming the entire bandwidth of the neural processing unit (NPU).

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 illustrates an example deep learning system, in accordance with various embodiments.
FIGS. 2A-2B illustrate examples conversations between a user and an Al model, in accordance with various embodiments.
FIG. 3 illustrates an example of an audio interface for signal encoding and/or decoding and buffering for a multimodal LLM, in accordance with various embodiments.
FIG. 4 illustrates an example system for continuous tokenization of an audio stream at an audio offload engine subsystem, in accordance with various embodiments.
FIG. 5 shows an example system for storing tokens for later use by a multimodal LLM, in accordance with various embodiments.
FIG. 6 shows a block diagram illustrating a system 600 for multimodal input and tokenization for multimodal LLMs, in accordance with various embodiments.
FIG. 7 is a flowchart showing an example method for communications with a multimodal LLM including continuous tokenization and storage of input, in accordance with various embodiments.
FIG. 8 is a block diagram of an example computing device, in accordance with various embodiments.

### Detailed Description

### Overview

LLMs are a type of neural network designed to understand and generate language. Multimodal LLMs can reason from multiple modalities, including, for example, audio, text, and/or images. Current multimodal large language models (LLMs) enable natural voice-based interaction with minimal latency. Users typically expect these multimodal LLMs to exhibit human-like intelligence, characterized by a comprehensive understanding of conversational context and the ability to seamlessly resume ongoing dialogue. Achieving this functionality in current systems requires processing speech over extended temporal contexts, which may range from a minute to several hours. In particular, current multimodal LLMs require persistent access to contextual information across extended timeframes to deliver natural, human-like interactions. To support an ongoing contextual understanding, the system continuously captures and analyzes audio input. However, continuous audio analysis results in significant power consumption. Thus, conventional approaches, which rely on raw audio processing and/or cloud-based inference, impose significant power and bandwidth demands, rendering continuous operation impractical for battery-powered devices. In addition to the execution environment of the underlying Al model, constant activation of audio tokenization alone can substantially reduce device battery (e.g., from more than twenty hours to only a few hours), thereby rendering the continuous use of multimodal LLMs impractical. Similarly, other types of inputs (e.g., visual) to a multimodal LLM cause significant power consumption when continuously analyzed, resulting in similar impracticality of continuous use for other modalities.

Some approaches to multimodal large language model (LLM) inference on laptop platforms include, for example, requiring the user to press a dedicated button to initiate interaction with the Al system, and triggering multimodal LLM inference based on high-level information derived from the audio stream. When the Al system is activated with a button press, analysis of the multimodal data stream commences only after the activation event. Consequently, the model does not have access to any audio or other data generated prior to the button press, resulting in diminished reasoning capabilities. Users are therefore compelled to repeat information to provide the necessary context for the Al to function effectively. Similarly, when multimodal LLM inference is activated based on high-level information derived from the audio stream, long-context information necessary for enabling human-like conversational capabilities or recall functions can still be missing. Some systems can provide insights into prior activities performed on the device by storing and analyzing snapshots of on-screen actions. However, the activities stored and analyzed are limited to snapshots and on-screen actions, and there are currently no analogous capabilities for audio or visual data.

According to various implementations, systems and methods are provided to address the limitations to continuous use of multimodal LLMs by distributing components of the multimodal inference pipeline across specialized hardware subsystems within a system-on-chip (SoC), thereby minimizing power consumption while preserving rich contextual data. For example, systems and methods are provided herein for power-efficient, continuous tokenization and analysis of multimodal data streams on client computing platforms such as laptops. The multimodal data streams can include audio data and visual data. The systems and methods include multiple interrelated technical features, each contributing to the overall advancement in multimodal large language model (LLM) deployment and user experience. Some features include the efficient distribution of multimodal LLM components across specialized hardware subsystems, a token-based storage mechanism for long-context recall using minimal bandwidth as well as for efficient representation and transmission of multimodal data, continuous Al availability, preservation of user privacy, and a mechanism by which user-space applications may subscribe to audio and video tokens generated within the firmware.

In some examples, inputs can be tokenized and efficiently stored. In particular, an input signal can be encoded into tokens, which are compact, machine-readable representations of the input data that preserve essential information while significantly reducing size compared to raw input samples or embeddings. Embeddings are continuous high-dimensional vectors that capture semantic meaning and are used by traditional LLMs. However, embeddings use a similar bandwidth as the raw audio stream, and thus embeddings use significantly more memory and bandwidth than tokens. Thus, instead of storing or transmitting an embedding or full raw input sample (e.g., full waveform data for an audio input), the systems and methods presented herein use an encoder to convert segments of input into discrete tokens. In various examples, the input can be tokenized at a deep neural network encoder, and the tokens can be stored for later use. For instance, the tokens can be stored in a buffer, a memory, and/or any other storage medium. In some examples, stored tokens may be deleted without being used. In some examples, a user may activate an LLM to make a request, and the LLM may process the stored tokens to understand the context of the request.

In some examples, an audio offload engine is integrated into the SoC to perform continuous audio tokenization. The audio offload engine includes an audio encoder configured to convert incoming audio streams into audio tokens - discrete, highly compressed, symbolic representations of the audio data that preserve essential acoustic and semantic information. These tokens are buffered locally in a token buffer, implemented using, for example, SRAM or DDR memory, to support configurable storage durations ranging from seconds to hours. This buffering mechanism enables long-context recall and facilitates real-time or retrospective analysis without transmitting raw audio data, thereby enhancing privacy and reducing system bandwidth use. In various examples, the audio tokens can be concatenated with text tokens and/or image tokens. The tokens can be stored for later use and/or for when an LLM is activated.

In some implementations, the systems and methods provided herein further incorporate a trigger mechanism that activates upon user input (and/or other predefined conditions) to initiate interaction with a multimodal LLM. Upon activation, the buffered audio tokens are transmitted to a multimodal LLM inference dispatcher, which determines the optimal distribution of tokens to one or more inference engines. The inference engines may reside on local accelerators, such as CPUs, NPUs, or GPUs, or on remote servers, depending on system configuration and resource availability. The dispatcher can manage token flow through a dedicated token API, to provide low-latency communication and efficient workload allocation.

By offloading tokenization to low-power subsystems and implementing a scalable architecture for token buffering and distribution, the techniques provided herein enable continuous multimodal processing with minimal power overhead. The techniques extend battery life from approximately six hours to over twenty hours while maintaining artificial intelligence (*e.g.,* LLM) availability at all times. Additionally, the systems and methods can be used for any input modality, including audio, video, text, and image. In various examples, each type of input can have a dedicated hardware block for tokenization of the input type. For instance, video input can be tokenized at a video offload engine.

According to various implementations, systems and methods are provided for achieving seamless, context-aware, and privacy-preserving multimodal AI interactions on client platforms. The systems and methods combine efficient hardware utilization, token-based data representation, and dynamic inference distribution to overcome the limitations of existing solutions and enable next-generation user experiences. In some examples, systems and methods include power-efficient, continuous tokenization of input for multimodal LLMs on client devices. Continuous tokenization can include continuous audio tokenization, continuous video tokenization, and/or other continuous input tokenization.

For purposes of explanation, specific numbers, materials, and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

The systems, methods, and devices of this disclosure each have several innovative aspects, no single one of which is solely responsible for all desirable attributes disclosed herein. Details of one or more implementations of the subject matter described in this specification are set forth in the description below and the accompanying drawings.

### Example Deep Learning System

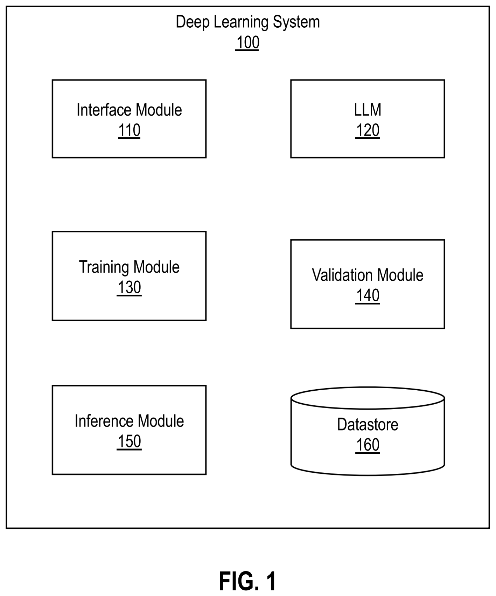

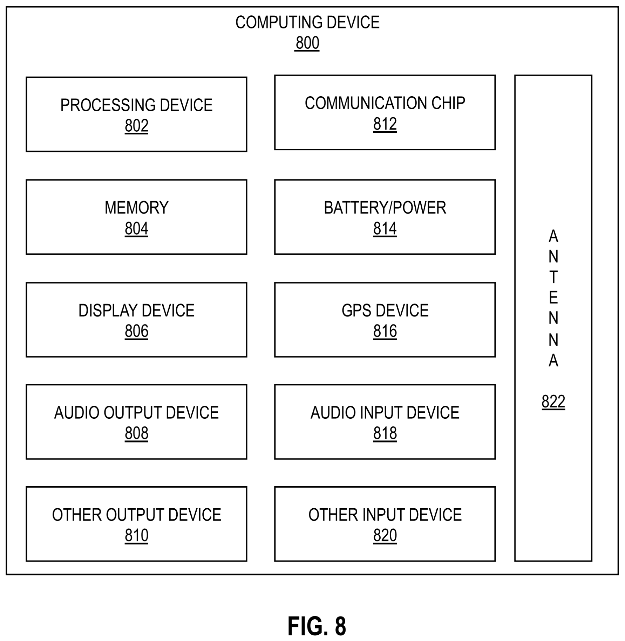

FIG. 1 is a block diagram of an example deep learning system 100, in accordance with various embodiments. The deep learning system 100 trains DNNs for various tasks, including multimodal LLM processes. The deep learning system 100 includes an interface module 110, a LLM 120, a training module 130, a validation module 140, an inference module 150, and a datastore 160. In other embodiments, alternative configurations, different or additional components may be included in the deep learning system 100. Further, functionality attributed to a component of the deep learning system 100 may be accomplished by a different component included in the deep learning system 100 or a different system. The deep learning system 100 or a component of the deep learning system 100 (e.g., the training module 130 or inference module 150) may include the computing device 800 in FIG. 8.

The interface module 110 facilitates communications of the deep learning system 100 with other systems. As an example, the interface module 110 supports the deep learning system 100 to distribute trained DNNs to other systems, e.g., computing devices configured to apply DNNs to perform tasks. In some examples, the interface module 110 establishes communication of the LLM 120 with a detection head as discussed herein, wherein the detection head may also be a neural network. As another example, the interface module 110 establishes communications between the deep learning system 100 with an external database to receive data that can be used to train DNNs or input into DNNs to perform tasks. In some embodiments, data received by the interface module 110 may have a data structure, such as a matrix. In some embodiments, data received by the interface module 110 may be audio, such as an audio stream, and the audio may include speech. In some embodiments, the data received by the interface module 110 may be video, text and/or image data.

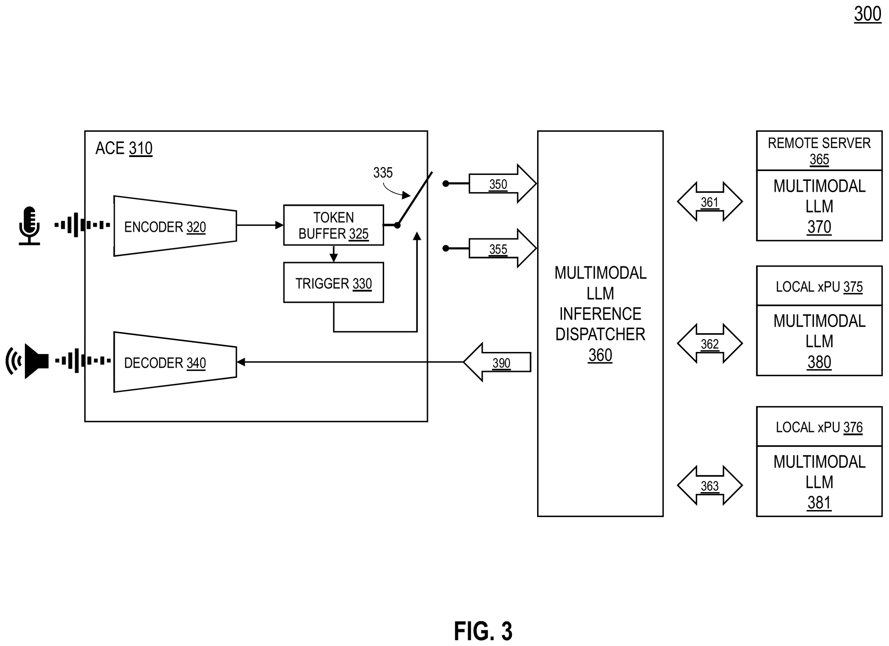

The multimodal large language model (LLM) 120 processes the input audio (and/or video, and/or text, and/or images) to understand language or other signals in the input data. In general, the LLM reviews the input data, processes language in the input data, and/or generates language or other reactions or answers in response to the input data. According to various examples, the multimodal LLM 120 processes tokens, such as audio tokens, and performs multimodal inference using these tokens as primary input. Upon receiving the tokens, LLM 120 integrates them into its context window, allowing the model to reason over both historical and real-time conversational data. The inference process may include generating text responses, synthesizing audio output, or combining audio tokens with other modalities such as video or image tokens for comprehensive multimodal understanding. By leveraging token-based input, the LLM 120 achieves significantly reduced latency while preserving details that are lost in text-only representations. In some examples, the LLM 120 can operate locally on an xPU or remotely on a server while maintaining consistent token-based interaction for privacy and efficiency. During training, the LLM 120 is fed large amounts of preprocessed data, including, for example, audio data and text data, and the LLM 120 learns to predict the next word in a sequence and understand language. The LLM 120 can be an LLM as described herein with reference to FIGS. 3-6.

The training module 130 trains DNNs by using training datasets. In some embodiments, a training dataset for training a DNN may include audio streams and/or text. In some examples, the training module 130 trains the LLM 120. The training module 130 may receive real-world audio data for processing with the LLM 120 as described herein.

In some embodiments, a part of the training dataset may be used to initially train the LLM, and the rest of the training dataset may be held back as a validation subset used by the validation module 140 to validate performance of a trained LLM. The portion of the training dataset not including the tuning subset and the validation subset may be used to train the LLM.

The training module 130 also determines hyperparameters for training the LLM. Hyperparameters are variables specifying the LLM training process. Hyperparameters are different from parameters inside the LLM (e.g., weights of filters). In some embodiments, hyperparameters include variables determining the architecture of the LLM, such as number of hidden layers, etc. Hyperparameters also include variables which determine how the LLM is trained, such as batch size, number of epochs, etc. A batch size defines the number of training samples to work through before updating the parameters of the LLM. The batch size is the same as or smaller than the number of samples in the training dataset. The training dataset can be divided into one or more batches. The number of epochs defines how many times the entire training dataset is passed through the entire network. The number of epochs defines the number of times that the deep learning algorithm works through the entire training dataset. One epoch means that each training sample in the training dataset has had an opportunity to update the parameters inside the LLM. An epoch may include one or more batches. The number of epochs may be 1, 10, 50, 100, or even larger.

The training module 130 defines the architecture of the LLM based on selected hyperparameters. In one embodiment, the LLM includes an input layer, an output layer, and a plurality of transformer-based hidden layers implementing self-attention mechanisms. The input layer receives tokenized representations of multimodal data, such as audio tokens, video tokens, or text tokens, encoded as tensors specifying attributes including embeddings, positional encodings, and attention weights. The hidden layers apply multi-head attention and feed-forward transformations to model contextual relationships across tokens. The output layer generates token predictions or multimodal outputs based on the processed context. In various examples, the LLM 120 may be implemented as a transformer architecture optimized for multimodal inference, enabling integration of audio, video, and text streams within a unified context window.

In the process of defining the architecture of the DNN, the training module 130 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 130 defines the architecture of the LLM, the training module 130 inputs a training dataset into the LLM. The training dataset includes a plurality of training samples. An example of a training dataset includes a series of audio tokens of an audio stream.

The training module 130 may train the LLM for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 130 finishes the predetermined number of epochs, the training module 130 may stop updating the parameters in the DNN. The DNN having the updated parameters is referred to as a trained DNN.

The validation module 140 verifies accuracy of trained DNNs. In some embodiments, the validation module 140 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 140 may determine an accuracy score measuring the precision, recall, or a combination of precision and recall of the LLM. The validation module 140 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 140 may compare the accuracy score with a threshold score. In an example where the validation module 140 determines that the accuracy score of the augmented model is lower than the threshold score, the validation module 140 instructs the training module 130 to re-train the LLM. In one embodiment, the training module 130 may iteratively re-train the LLM until the occurrence of a stopping condition, such as the accuracy measurement indication that the LLM may be sufficiently accurate, or a number of training rounds having taken place.

The inference module 150 applies the trained or validated LLM to perform tasks. The inference module 150 may run inference processes of a trained or validated LLM. In some examples, inference makes use of the forward pass to produce model-generated output for unlabeled real-world data. For instance, the inference module 150 may input real-world data into the LLM and receive an output of the LLM. The output of the LLM may provide a solution to the task for which the LLM is trained for.

The inference module 150 may aggregate the outputs of the LLM to generate a final result of the inference process. In some embodiments, the inference module 150 may distribute the LLM to other systems, e.g., computing devices in communication with the deep learning system 100, for the other systems to apply the LLM to perform the tasks. The distribution of the LLM may be done through the interface module 110. In some embodiments, the deep learning system 100 may be implemented in a server, such as a cloud server, an edge service, and so on. The computing devices may be connected to the deep learning system 100 through a network. Examples of the computing devices include edge devices.

The datastore 160 stores data received, generated, used, or otherwise associated with the deep learning system 100. For example, the datastore 160 stores video processed by the LLM 120 or used by the training module 130, validation module 140, and the inference module 150. The datastore 160 may also store other data generated by the training module 130 and validation module 140, such as the hyperparameters for training LLMs, internal parameters of trained LLMs (e.g., values of tunable parameters of activation functions, such as Fractional Adaptive Linear Units (FALUs)), etc. In the embodiment of FIG. 1, the datastore 160 is a component of the deep learning system 100. In other embodiments, the datastore 160 may be external to the deep learning system 100 and communicate with the deep learning system 100 through a network.

### Example Tokenization for Multimodal Large Language Model

Multimodal LLMs (MLLMs) include any large language models capable of processing inputs or generating outputs across various modalities. Examples of these modalities include text, audio in the form of speech, voice, and/or music, static images, and dynamic visual streams such as video. While the systems and methods presented herein are applicable to multiple modalities, for the sake of simplicity, the systems and methods are presented with respect to the audio stream. The terms LLM and Al are used interchangeably herein when referring to systems that process language information and/or assist users in executing tasks.

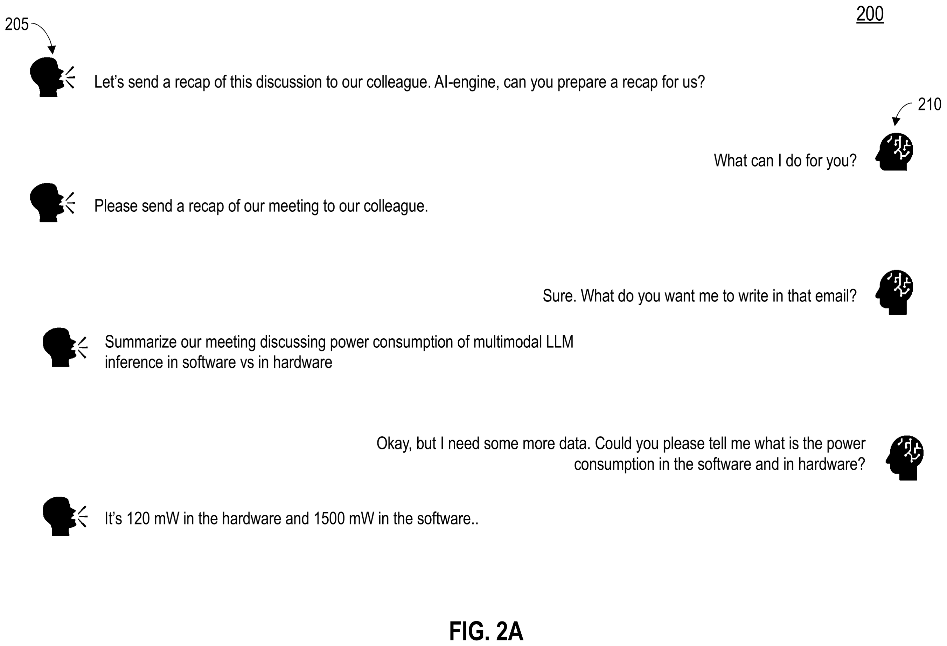

First, as shown in FIG. 2A, an example 200 use case is illustrated, in which two people have a 1:1 meeting. The two meeting participants discuss the approach to executing a neural network model on a selected platform. At the end of the meeting, the participants reach a conclusion and want to share it with a third person. A first participant 205 proposes to have an Al model prepare the email. FIG. 2A illustrates an example conversation with Al as per the current state of the art. After the first participant 205 triggers the Al model 210 to start (either by button or by voice), the first participant 205 then has to provide additional context to the Al model 210. Thus, the user experience is far from optimal. This is because the Al model 210 has no access to what was discussed in the meeting before the conversation with the Al model 210 was initiated.

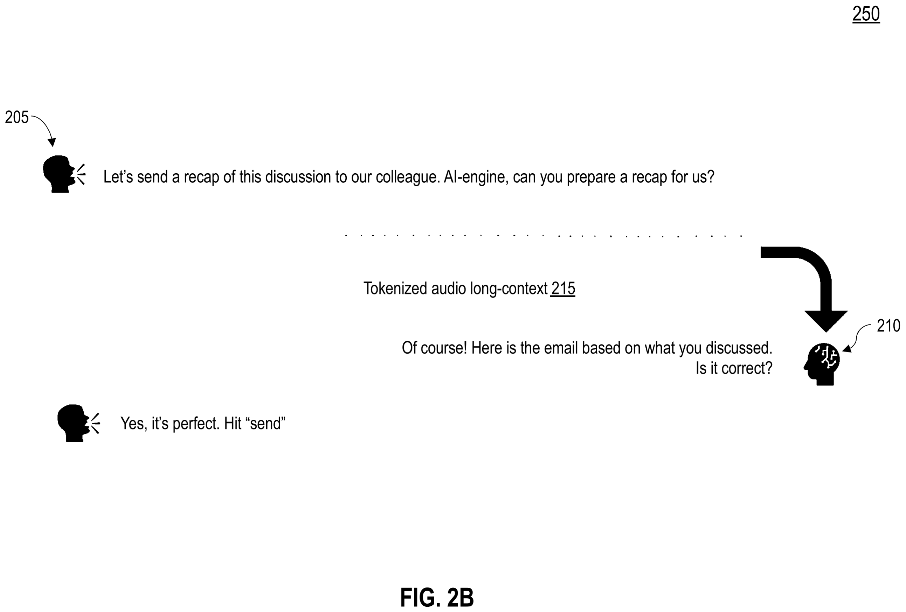

FIG. 2B illustrates an example 250 of what the conversation between the first participant 205 and the Al model 210 can look like with the systems and methods presented herein, in accordance with various embodiments. While the participants have a discussion in a meeting, the audio of the discussion is continuously tokenized in the background. Tokenization is performed in the hardware subsystem as described herein, so that no noticeable power usage occurs. Moreover, in some examples, confidential information such as speaker characteristics are removed from the tokens and thus can be contained on the edge device (e.g., laptop) and not saved and transmitted as tokens. As shown in FIG. 2B, when the first participant 205 decides to engage the Al model 210, the tokenized audio 215 of the meeting is transmitted to the Al model 210, and the Al model 210 has access to the context of the initial query ("can you prepare a recap for us"). Thus, the Al model 210 can immediately understand what the first participant 205 is requesting and can retrieve the data needed to write the recap and prepare an email.

FIG. 3 illustrates an example of a system 300 for signal encoding and/or decoding and buffering for a multimodal LLM, in accordance with various embodiments. In particular, FIG. 3 presents an efficient distribution of multimodal LLM components. The systems and methods presented herein include distributing multimodal LLM inference across dedicated, modality-specific engines within the system-on-chip (SoC). Tokenization may occur within the SoC, while high-compute-capable units may perform LLM model inference. These units can be remote server resources or local xPUs (processing units), such as CPUs (central processing units), NPUs (neural processing units), and/or GPUs (graphics processing units).

As shown in the block diagram of an example system architecture in FIG. 3, an audio input from a microphone is received at an audio offload engine 310. The audio offload engine 310 is a specialized hardware subsystem within a SoC designed to efficiently process audio signals with minimal power consumption. The audio offload engine 310 includes an encoder 320, a token buffer 325, a trigger 330, and a decoder 340. Upon receiving the audio input, the encoder 320 executes a neural network model to generate a plurality of audio tokens based on the audio input. The neural network model may include convolutional and transformer layers. The audio tokens are highly compressed representations of the audio stream, preserving both acoustic and semantic information while significantly reducing bandwidth and storage requirements. In some examples, the audio encoder 320 includes a vector quantizer that transforms real-valued vectors (*e.g*., embeddings) into integer tokens. In some examples, audio tokens can be integer numbers. In some examples, audio tokens can be vectors of integers. In some examples, the audio tokens can be vectors of integer numbers of fixed dimensions. In some examples, the audio tokens can be extracted from the audio at a fixed frame rate (e.g., 100 tokens per second of audio).

In some implementations, the microphone signal is encoded at the encoder 320 using a neural network model. In some examples, the encoder 320 is a deep neural network encoder that can consume raw input samples. In some examples, the encoder 320 is a deep neural network encoder that can consume frequency representations of the audio signal (e.g., FFT, or filterbank outputs). The deep neural network encoder can include convolutional layers and transformer layers. An example of a neural network model that can be used to encode the input signal is the opensource MIMI tokenizer. In some examples, model inference is offloaded to an audio offload engine neural network accelerator. The audio offload engine neural network accelerator can be a low-power hardware block designed to accelerate Al workloads such as audio processing, speech recognition, and noise suppression. In one example, the audio offload engine neural network accelerator is a low-power hardware block designed to accelerate neural network workloads.

The audio tokens generated by the encoder 320 are buffered in the token buffer 325. In some examples, the token buffer 325 can be implemented using embedded SRAM or DDR memory. The memory used for the buffer can depend on the available resources of the selected device. The buffering process can support both real-time analysis of audio data and retrospective analysis of audio data. In one embodiment, the token buffer 325 is configured to store tokens corresponding to a long context window, such as several minutes or several hours of conversation, enabling the system to maintain context for natural, seamless interaction with a multimodal LLM. The buffer 325 may be periodically flushed to persistent storage, such as a hard drive, to accommodate extended recall capabilities. The token buffer 325 also supports configurable scheduling, allowing user-space applications to subscribe to tokens at varying intervals (*e.g.*, every ~300 ms for low-latency interaction, every ~8 seconds for batch processing, etc.). In some examples, the primary purpose of the buffering and subscription mechanisms is to manage interrupts to the main CPU, since waking the CPU incurs significant power consumption due to transitions of the SoC to a higher power state. Conventional approaches require applications to subscribe to raw audio samples retrieved from the audio interface at intervals typically ranging from 10 to 100 milliseconds. This results in the CPU waking every 10 milliseconds merely to receive audio frames, and the associated power transition cost can reach hundreds of milliwatts. By contrast, the buffering and subscription mechanism provided herein enables applications to dramatically reduce CPU wakeups, for example, by subscribing to a buffer of 100 tokens every second, thereby achieving substantial power savings while maintaining continuous audio analysis.

A trigger 330 is operatively connected to the token buffer 325 and is configured to receive a signal to initiate conversation with a multimodal LLM. Upon activation of the trigger 330, the switch 335 is closed to connect the token buffer to signal path 350 or signal path 355 to a multimodal LLM inference dispatcher 350. In some examples, the signal path 350 is used to transmit long context batches of tokens, while the signal path 355 is used to transmit tokens for low-latency interactions. The multimodal LLM inference dispatcher 360 can be a proxy layer. The multimodal LLM inference dispatcher 360 is responsible for determining the distribution of the audio tokens to various multimodal LLMs. The multimodal LLM inference dispatcher 360 can select among multiple available inference engines 370, 380, 381. In some examples, the trigger 330 may be implemented as a small neural network model operating on the tokens, enabling intelligent activation based on user intent or detected keywords. In some examples, the output of the encoder 320 is received directly at the trigger 330. In some examples, the trigger 330 receives the output of an intermediate layer in the encoder 320.

The multimodal LLM inference dispatcher 360 is coupled to a plurality of multimodal LLMs 370, 380, 381, which may be located on a remote server 365 (multimodal LLM 370), or on local xPU devices 375, 376 (multimodal LLMs 380, 381). The multimodal LLM inference dispatcher 360 transmits the audio tokens to the selected inference engine via communication links 361, 362, and 363. In various examples, the multimodal LLM inference dispatcher 360 selects the multimodal LLM 370, 380, 381 to which audio tokens are transmitted based on, for instance, system configuration, resource availability, or user preference. According to various implementations, the architecture is agnostic to the location of the LLM 370, 380, 381, supporting both cloud-based and on-device inference. Additionally, the system can be used for other input modalities such as video and image.

According to various implementations, the multimodal LLM inference dispatcher 360 can be an active logic or control module. The multimodal LLM inference dispatcher 360 can perform various functions, including, for example, receiving tokens from various encoders and buffers, aggregating and organizing the tokens into a context window, determining which inference engine (local or remote, CPU, NPU, GPU, etc.) should process the tokens, and/or managing the flow of tokens and results between the hardware subsystems and the LLMs. Thus, in various examples, the multimodal LLM inference dispatcher 360 dispatcher is a dispatching and control module that enables flexible, efficient, and context-aware distribution of multimodal data for Al inference.

The decoder 340 in the audio offload engine 310 is configured to receive processed tokens or output from the selected multimodal LLM and convert the received input into an audio output for playback via a speaker. This enables real-time or near-real-time interaction between the user and the multimodal LLM, leveraging the efficient tokenization and buffering mechanisms described above. The proximity of the audio offload engine 310 to the audio interface ensures low-latency processing and minimal power usage, supporting continuous operation without significant impact on battery life.

According to various implementations, the system 300 implements a method including: receiving an audio input at the audio offload engine 310, generating a plurality of audio tokens via encoder 320, buffering the audio tokens in token buffer 325, receiving a trigger 330 to initiate conversation with a multimodal LLM, transmitting the tokens to the multimodal LLM inference dispatcher 360, and determining, at the multimodal LLM inference dispatcher 360, the distribution of the audio tokens to one or more multimodal LLMs (370, 380, 381) for further processing. According to various embodiments, the architecture enables power-efficient, context-rich, and scalable multimodal Al interactions suitable for client devices, with robust support for long-context recall and privacy-preserving local processing

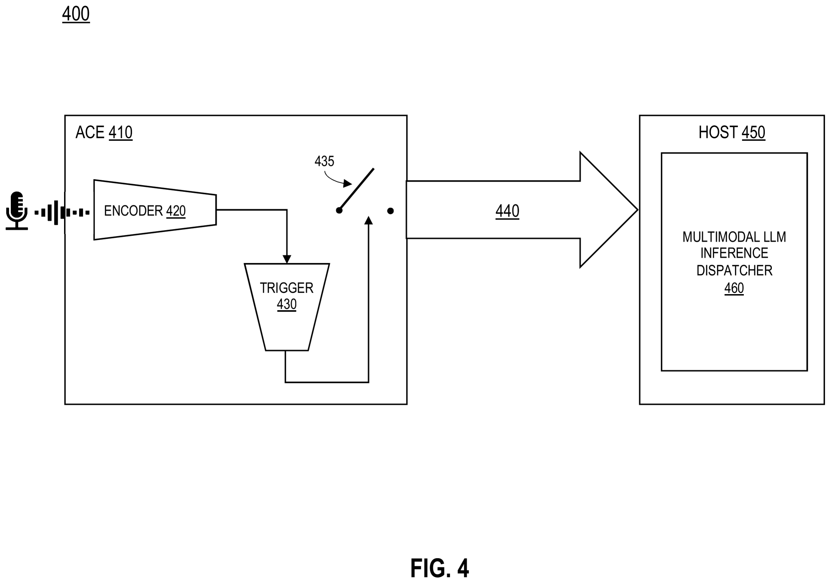

FIG. 4 illustrates an example system 400 for continuous tokenization of an audio stream at an audio offload engine subsystem, in accordance with various embodiments. The system 400 includes an audio offload engine 410, a host 450, and a communication link 440. The audio offload engine 410 is configured to perform audio tokenization and buffering, while the host 450 manages multimodal inference. The communication link 440 provides a data path for transmitting audio tokens from the audio offload engine 410 to the host 450.

The audio offload engine 410 includes an encoder 420, a trigger 430, and a switch 435. The encoder 420 can include a neural network model configured to convert audio input into a plurality of audio tokens. The tokens represent compressed, discrete units of audio data that preserve semantic and acoustic features for multimodal processing. The encoder 420 operates continuously in a low-power mode, enabling background tokenization while the computing device (e.g., laptop) is idle or in a power-saving state. This approach allows the system to maintain a long-context buffer of audio tokens for future Al interactions without draining the battery.

The trigger 430 can include a control mechanism for initiating token transmission to the host 450. The trigger 430 may be activated by a user command, a keyword detection event, or a system-level signal indicating readiness for multimodal inference. The trigger 430 can be activated after a period of conversation, allowing the buffered tokens to be sent for Al processing. This enables the AI to "catch up" with the context of the discussion, supporting seamless, natural user experiences. In some examples, the audio offload engine 410 includes a buffer or memory for storing the audio tokens until the trigger 430 is activated.

The switch 435 can include a routing element that selectively connects the encoder 420 and trigger 430 to the communication link 440. In one example, the switch 435 remains in an inactive state during background tokenization and transitions to an active state upon receiving a trigger signal, thereby allowing tokens to be transmitted to the host 450. This selective routing allows for power efficiency and ensures that relevant tokens are sent for inference when needed. In some examples, the selective routing prevents irrelevant tokens from being sent to the host 450 for inference.

The communication link 440 can include a high-speed data interface for transferring audio tokens from the audio offload engine 410 to the host 450. In some examples, the communication link 440 may be implemented using an internal bus or a dedicated interconnect optimized for low-latency token delivery. The communication link 440 can enable efficient transmission of buffered tokens for real-time or near-real-time inference.

According to various implementations, the tokens are delivered to a multimodal LLM through a dedicated token API. The LLM application can subscribe to the tokens with configurable schedule period and buffer length (e.g. buffer 90 seconds of context, send tokens every 300 ms). In various examples, the multimodal LLM can be executed in the cloud or on the local accelerator, such as NPU, GPU, or CPU. In various examples, multimodal LLMs offer highly natural voice with just a few billion parameters, which is capable of on-device inference.

The host 450 includes a multimodal LLM inference dispatcher 460. The host 450 can also include associated processing modules. The multimodal LLM inference dispatcher 460 can include logic for receiving audio tokens from the audio offload engine 410. The multimodal LLM inference dispatcher 460 can include logic for determining the distribution of the audio tokens to one or more inference engines (e.g., multimodal LLMs). In various examples, the inference engines may reside locally on CPUs, NPUs, and/or GPUs, or remotely on a server, depending, for instance, on system configuration and resource availability. The multimodal LLM inference dispatcher 460 is agnostic to the location of the LLM, supporting both cloud-based and on-device inference.

The multimodal LLM inference dispatcher 460 can include a token API for managing token flow and scheduling inference operations. In some examples, the multimodal LLM inference dispatcher 460 may aggregate tokens into a context window, enabling the multimodal LLM to process historical and real-time audio data for generating context-aware responses. In various examples, the multimodal LLM inference dispatcher 460 supports extensibility to other modalities, such as video or image tokens, for comprehensive multimodal reasoning.

The encoder 420 and trigger 430 can operate in conjunction with a token buffer (not shown) to store tokens prior to transmission. The buffer may reside in local SRAM or DDR memory within the audio offload engine 410 and can be configured to retain tokens for durations ranging from seconds to hours. According to various examples, the buffering capability enables long-context recall and improves user experience by providing the LLM with access to prior conversational data. In various embodiments, FIG. 4 illustrates a system in which audio tokenization is performed continuously and efficiently in hardware, buffered for long-context recall, and selectively transmitted for multimodal inference. The architecture supports seamless, always-on Al experiences, enabling the Al to understand and respond to conversations with full context.

According to various implementations, the audio offload engine is an optimum hardware subsystem to execute audio tokenization. Due to its proximity to the audio interface and low-power neural network inference capabilities, the continuous audio tokenization comes with a very low power cost as compared to, for example, a NPU, a CPU or other processing unit. In some examples, the majority of the cost comes from CPU residency, which is often interrupted to handle incoming audio frames. In other systems, pulse code modulation audio data is shared between the audio offload engine and the host. However, in the systems and methods presented herein, the audio samples are replaced by audio tokens. The audio token representation is highly compressed. For example, encoding 80 milliseconds of audio (1920 samples at a 24kHz sample rate) uses only 8 token values. Assuming a 16-bit audio resolution and storing tokens in a 16-bit container, the systems and method presented herein achieve a 240:1-compression ratio.

In various implementations, the audio offload engine can implement any tokenizer, including available commercial options. Currently, there is no standardized tokenization method for audio.

### Example Tokenization and Long-Context Storage for Multimodal Large Language Model

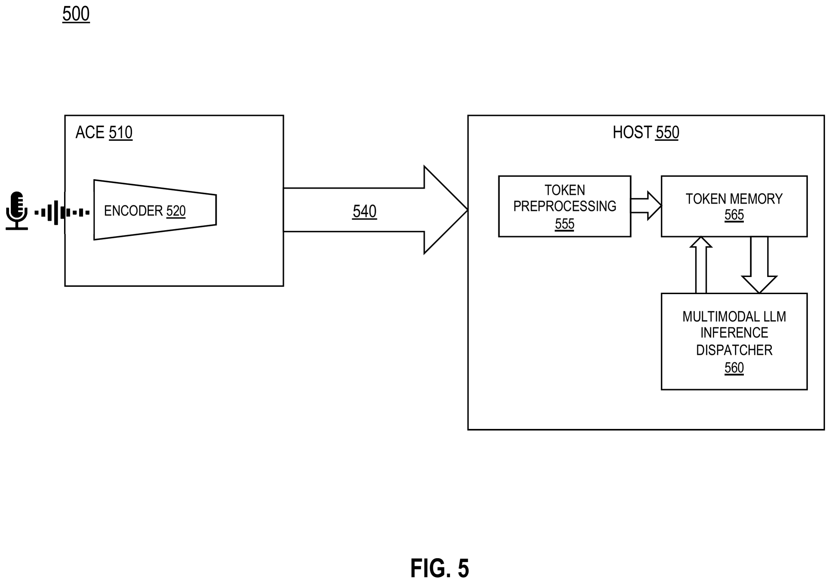

FIG. 5 shows an example system 500 for storing tokens for later use by a multimodal LLM, in accordance with various embodiments. The system 500 includes an audio offload engine 510, a host 550, and a communication link 540. The audio offload engine 510 is configured to perform audio tokenization, while the host 550 manages token preprocessing, long-context token storage, and multimodal LLM inference. The communication link 540 provides a data path for transmitting audio tokens from the audio offload engine 510 to the host 550.

In some examples, the LLM needs to analyze the content of past conversations, held in a timespan of hours or even days. Thus, a mechanism is provided to store tokens in memory and recall the tokens later upon request. In particular, in various examples, the audio offload engine 510 encodes the tokens, and the tokens are streamed to the host 550 to be stored in memory. In some examples, the host interrupts are scheduled with a minimum frequency to minimize CPU residency and conserve power (*e.g*., 1 KB of tokens is sent to the host 550 every 8 seconds). From the perspective of memory, token buffering is inexpensive. For instance, storing one hour of recording using tokens consumes only about 700 KB of storage memory. Additionally, transferring buffered tokens from a buffer to a remote server is simple and inexpensive. Systems and methods are provided for a configurable mechanism to preprocess the tokens while storing them.

The audio offload engine 510 includes an encoder 520. The encoder 520 can include a neural network model configured to convert audio input into a plurality of audio tokens. The tokens are discrete, compressed representations of the audio stream, preserving both semantic and acoustic features. The encoder 520 operates continuously in a low-power mode, enabling background tokenization while the device is idle or in a power-saving state. Thus, the system 500 can maintain a buffer 565 of audio tokens for future Al interactions without significant battery drain.

The communication link 540 can include a high-speed data interface for transferring audio tokens from the audio offload engine 510 to the host 550. This link may be implemented using an internal bus or a dedicated interconnect optimized for low-latency token delivery. The communication link 540 ensures that tokens are transmitted efficiently for real-time or retrospective inference.

The host 550 includes a token preprocessing module 555, a token memory 565, and a multimodal LLM inference dispatcher 560. The token preprocessing module 555 can include logic for analyzing, filtering, and organizing audio tokens prior to storage. Token preprocessing may include searching for keywords, analyzing speech intent, and/or detecting objects in video. Token preprocessing 555 can generate metadata that can be stored to accelerate future search and retrieval.

The token memory 565 can include a storage buffer implemented in DDR memory or persistent storage, configured to retain tokens for durations ranging from seconds to hours or even days. In one example, storing one hour of tokens uses about 700 KB, making it easily feasible to buffer a full day's worth of context. The token memory 565 enables long-context recall, allowing the multimodal LLM to analyze conversations held over extended periods.

The token preprocessing module 555 and token memory 565 can operate in conjunction to optimize the storage and retrieval of tokens. Preprocessing may include filtering out silence, organizing tokens for efficient access, searching for keywords, analyzing the intent of speech, detecting objects in video, and/or removing sensitive data. Preprocessing ensures that only relevant tokens are retained and made available for inference. Additionally, preprocessing can generate metadata, and the metadata resulting from the analysis can be stored to accelerate the search for relevant content.

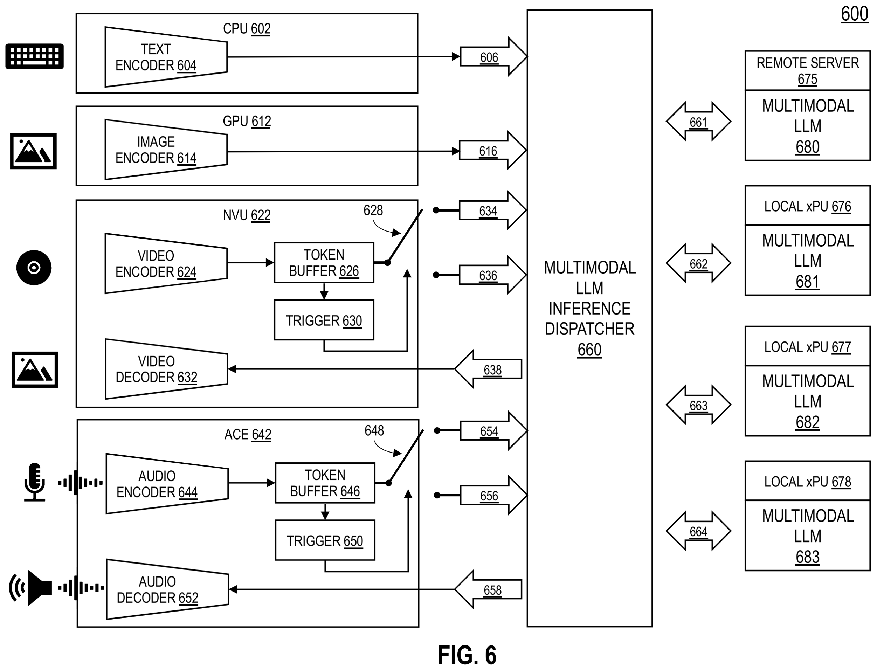

The multimodal LLM inference dispatcher 560 can include logic for receiving tokens from the token memory 565 and determining their distribution to one or more inference engines, as discussed in greater detail with respect to FIGS. 3 and 6. The inference engines can be multimodal LLMs that reside locally on a CPU, a NPU, and/or a GPU, and/or the inference engines can be multimodal LLMs that reside remotely on a server, depending on system configuration and resource availability. The dispatcher 560 is agnostic to the location of the LLM, supporting both cloud-based and on-device inference.

In some implementations, the multimodal LLM inference dispatcher 560 can aggregate tokens into a context window, allowing the selected LLM to process both historical and real-time audio data for generating context-aware responses. In various examples, the multimodal LLM inference dispatcher 560 supports extensibility to other modalities, such as video or image tokens, for comprehensive multimodal reasoning.

According to various implementations, the system 500 can implement a method of tokenizing input for a multimodal LLM, including receiving an audio input at the audio offload engine 510, generating a plurality of audio tokens at the encoder 520, transmitting the tokens through the communication link 540, preprocessing the tokens at the token preprocessing module 555, storing the tokens in the token memory 565, and determining, at the multimodal LLM inference dispatcher 560, distribution of the tokens for inference. The architecture provides power-efficient, privacy-preserving, and context-rich multimodal Al interaction.

Thus, in various implementations, FIG. 5 illustrates a system in which audio tokenization is performed continuously and efficiently in hardware, tokens are preprocessed and stored for long-context recall, and tokens are selectively transmitted for multimodal inference. The design supports seamless, always-on Al experiences, enabling the Al to understand and respond to conversations with full context, as illustrated in FIG. 2B.

### Example Multimodal Input and Tokenization for Multimodal Large Language Model

FIG. 6 shows a block diagram illustrating a system 600 for multimodal input and tokenization for multimodal LLMs, in accordance with various embodiments. The system 600 includes a CPU 602, an GPU 612, a video offload engine 622, an audio offload engine 642, a multimodal LLM inference dispatcher 660, and a plurality of multimodal LLMs 680, 681, 682, 683. The system 600 includes modules for efficient tokenization and long-context storage of multimodal inputs that can be used for multimodal LLM inference. The system 600 supports audio, video, image, and text modalities.

In some implementations, FIG. 6 illustrates a hardware offload for multimodal input tokenization. The system 600 includes multiple different encoders for different types of input. In various examples, the techniques discussed with respect to audio input can be easily extended to other modalities, such as video and image. A similar tokenization process can be used for video, image, and audio data. Like audio-based language models, the encoder/decoder steps for video and image can be efficiently offloaded to specialized hardware, such SoC units like the video offload engine and GPUs. Token buffering for context analysis can be stored and accessed on demand, akin to the audio recall and meeting context analysis used in audio applications. Figure 6 illustrates a system 600 that supports multiple input and output interfaces and operates on a selected platform.

For textual input, the system 600 includes a CPU 602. The CPU 602 includes a text encoder 604. The text encoder 604 can include logic for converting textual input into text tokens suitable for processing by a multimodal LLM. The output of the text encoder 604 is transmitted via a communication link 606 to the multimodal LLM inference dispatcher 660.

For image input, the system 600 includes a GPU 612. The GPU 612 includes an image encoder 614. The image encoder 614 can include a neural network model configured to convert image input into image tokens. The image tokens are transmitted via a communication link 616 to the multimodal LLM inference dispatcher 660.

For video input, the system 600 includes a video offload engine 622. The video offload engine 622 includes a video encoder 624, a token buffer 626, a trigger 630, and a video decoder 632. The video encoder 624 can include a neural network model for converting video input into video tokens. The token buffer 626 can store video tokens for long-context recall, and the trigger 630 can initiate transmission of buffered tokens to the multimodal LLM inference dispatcher 660. The video offload engine 622 includes a switch 628 that can be closed to connect the token buffer 626 to the multimodal LLM inference dispatcher 660 for transmission of tokens. The communications links 634, 636 can be used to transmit tokens to the multimodal LLM inference dispatcher 660. In some examples, the communication link 634 can be used for a bulk transmission of tokens saved in the buffer, and the communication link 636 can be used to transmit tokens as they are encoded. The communication link 638 can be used to receive tokens from the multimodal LLM inference dispatcher 660. The video decoder 632 can reconstruct video output from processed tokens.

For audio input, the system 600 includes an audio offload engine 642. The audio offload engine 642 includes an audio encoder 644, a token buffer 646, a trigger 650, and an audio decoder 652. The audio encoder 644 can include a neural network model for converting audio input into audio tokens. The token buffer 646 can store audio tokens for durations ranging from seconds to hours, supporting long-context recall. The trigger 650 can initiate transmission of buffered tokens to the multimodal LLM inference dispatcher 660.

The audio offload engine 642 includes a switch 648 that can be closed to connect the token buffer 646 to the multimodal LLM inference dispatcher 660 for transmission of tokens. The communications links 654, 656 can be used to transmit tokens to the multimodal LLM inference dispatcher 660. In some examples, the communication link 654 can be used for a bulk transmission of tokens saved in the buffer, and the communication link 656 can be used to transmit tokens as they are encoded. The communication link 658 can be used to receive tokens from the multimodal LLM inference dispatcher 660. The audio decoder 652 can reconstruct audio output from processed tokens.

The token buffers 626 and 646 can include storage implemented in SRAM, DDR memory, and/or persistent storage, enabling retention of tokens for extended periods. This can allow the system to analyze conversations or video streams held over hours or days, supporting advanced recall and context-aware inference.

The triggers 630 and 650 can include mechanisms for activating token transmission based on user input, system events, or keyword detection. This selective transmission provides power efficiency and privacy, as only relevant tokens are sent for inference when needed.

According to various implementations, the multimodal LLM inference dispatcher 660 includes logic for various functions, such as for receiving tokens from the various encoders and buffers, for aggregating tokens into a unified context window, and for determining distribution of tokens to one or more multimodal LLMs. The multimodal LLM inference dispatcher 660 is indifferent as to the modality and location of the LLM, supporting both cloud-based and on-device inference.

The system 600 further includes a remote server 675 and local xPUs 676, 677, 678. The remote server 675 comprises a multimodal LLM 680, while the local xPUs 676, 677, 678 comprise multimodal LLMs 681, 682, 683, respectively. Communication links 661, 662, 663, and 664 connect the multimodal LLM inference dispatcher 660 to these inference engines.

According to various implementations, FIG. 6 illustrates a comprehensive multimodal system in which tokenization and buffering are performed across dedicated hardware subsystems for text, image, video, and audio. Tokens are aggregated and dispatched for inference by one or more multimodal LLMs, enabling seamless, context-rich, and power-efficient Al experiences.

### Example Method for Tokenization for Multimodal Large Language Model

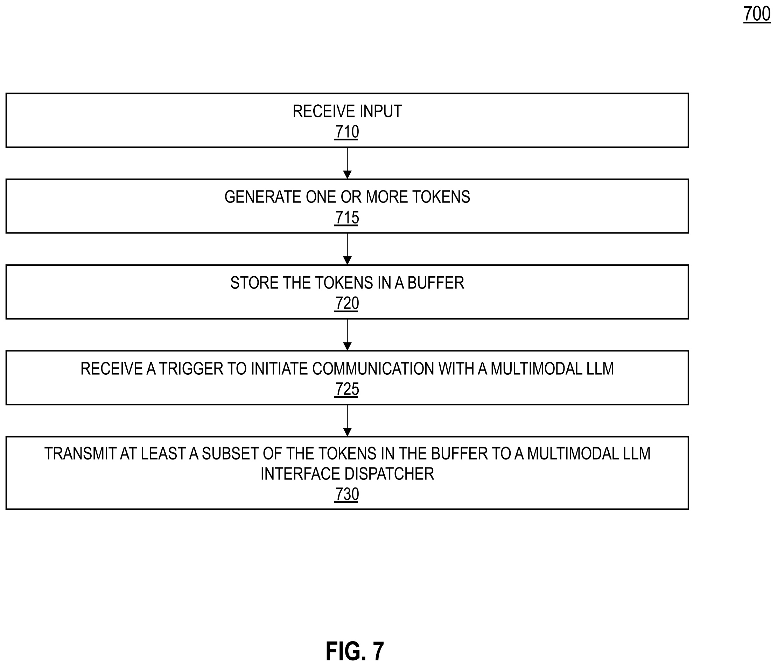

FIG. 7 is a flowchart showing an example method 700 for tokenization and long-context token storage of input for use with multimodal LLM interactions, in accordance with various embodiments. In particular, the method 700 is an example method for tokenizing input and storing the input in a memory until communication with a multimodal LLM is initiated. Although the method 700 is described with reference to the flowchart illustrated in FIG. 7, many other methods for tokenization and storage for multimodal LLM communications may alternatively be used. For example, the order of execution of the elements in FIG. 7 may be changed. As another example, some of the steps may be changed, eliminated, or combined. In various examples, the method 700 can be implemented by a system for signal encoding and/or decoding and buffering for a multimodal LLM, such as the systems of FIGS. 1 and 3-6.

At 710, an input is received at a selected device. The input can be an audio signal captured by a microphone or other audio input device. The input may also include other modalities such as video or image data. The selected device may be a specialized hardware subsystem, such as neural encoder, optimized for low-power, continuous operation. In some examples, the selected device is an audio offload engine.

At 715, one or more tokens are generated based on the received input. In some examples, an encoder processes the input signal and converts the input into a sequence of discrete tokens. The tokens are highly compressed representations of the input that retain features of the original input, enabling efficient downstream processing by a multimodal LLM. In some examples, the tokens are audio tokens representing audio input, and the audio tokens retain both semantic and acoustic features of the original input. In some examples, audio tokens can be concatenated with video tokens, text tokens, and/or image tokens. In some examples, the encoder is implemented as a neural network model within an acoustic context engine or similar subsystem.

At 720, the tokens are stored in a buffer. The buffer may be implemented in local SRAM, DRAM, or other memory associated with the selected device. The buffer can be configured to retain tokens for a selected duration, which may range from several minutes to several hours, thereby supporting long-context recall. The retention of tokens representing long durations of input allows the system to maintain a continuous record of the conversation or input stream, even when the Al is not actively engaged.

At 725, a trigger to initiate communication with a multimodal LLM is received. The trigger may be generated, for example, by a user command, a detected keyword, or a system event indicating that Al assistance is desired. Upon receiving the trigger, the system prepares to transmit tokens to the multimodal LLM for inference.

At 730, at least a subset of the tokens in the buffer are transmitted to a multimodal LLM inference dispatcher. In some examples, the subset of tokens include tokens for a selected duration of time and/or tokens from a particular point in time (e.g., from the beginning of a meeting). In some examples, the subset of tokens includes tokens that contain substantive audio content, while noise and other non-substantive content is removed. In some examples, the tokens are preprocessed before transmission to the multimodal LLM inference dispatcher. The multimodal LLM inference dispatcher performs various functions, such as aggregating the tokens, organizing the tokens into a context window, and determining the distribution of tokens to one or more multimodal LLMs for processing.

According to various implementations, the method 700 enables the Al to access the full context of prior interactions, resulting in more natural, seamless, and context-aware responses. Additionally, the method 700 enables efficient, privacy-preserving, and scalable multimodal Al interactions by continuously tokenizing and buffering input data, and selectively transmitting long-context tokens to a multimodal LLM when requested. The method 700 addresses the limitations of conventional systems, which often lack the ability to maintain context and lack the ability to operate efficiently on battery-powered devices.

### Example Computing Device

FIG. 8 is a block diagram of an example computing device 800, in accordance with various embodiments. In some embodiments, the computing device 800 can be used as at least part of the systems discussed herein. A number of components are illustrated in FIG. 8 as included in the computing device 800, but any one or more of these components may be omitted or duplicated, as suitable for the application. In some embodiments, the computing device 800 includes an audio offload engine, a neural video unit, a multimodal LLM inference dispatcher, and/or any other components discussed herein. In some embodiments, some or all of the components included in the computing device 800 may be attached to one or more motherboards. In some embodiments, some or all of these components are fabricated onto a single system on a chip (SoC) die. Additionally, in various embodiments, the computing device 800 may not include one or more of the components illustrated in FIG. 8, but the computing device 800 may include interface circuitry for coupling to the one or more components. For example, the computing device 800 may not include a display device 806, but may include display device interface circuitry (e.g., a connector and driver circuitry) to which a display device 806 may be coupled. In another set of examples, the computing device 800 may not include an audio input device 818 or an audio output device 808, but may include audio input or output device interface circuitry (e.g., connectors and supporting circuitry) to which an audio input device 818 or audio output device 808 may be coupled.

The computing device 800 may include a processing device 802 (e.g., one or more processing devices). The processing device 802 processes electronic data from registers and/or memory to transform that electronic data into other electronic data that may be stored in registers and/or memory. The computing device 800 may include a memory 804, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 804 may include memory that shares a die with the processing device 802. In some embodiments, the memory 804 includes one or more non-transitory computer-readable media storing instructions executable to perform deep learning operations, e.g., the methods described above. The instructions stored in the one or more non-transitory computer-readable media may be executed by the processing device 802.

In some embodiments, the computing device 800 may include a communication chip 812 (e.g., one or more communication chips). For example, the communication chip 812 may be configured for managing wireless communications for the transfer of data to and from the computing device 800. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

The communication chip 812 may implement any of a number of wireless standards or protocols, including but not limited to Institute for Electrical and Electronic Engineers (IEEE) standards including Wi-Fi (IEEE 802.5 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 812 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 812 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 812 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 812 may operate in accordance with other wireless protocols in other embodiments. The computing device 800 may include an antenna 822 to facilitate wireless communications and/or to receive other wireless communications (such as AM or FM radio transmissions).

In some embodiments, the communication chip 812 may manage wired communications, such as electrical, optical, or any other suitable communication protocols (e.g., the Ethernet). As noted above, the communication chip 812 may include multiple communication chips. For instance, a first communication chip 812 may be dedicated to shorter-range wireless communications such as Wi-Fi or Bluetooth, and a second communication chip 812 may be dedicated to longer-range wireless communications such as global positioning system (GPS), EDGE, GPRS, CDMA, WiMAX, LTE, EV-DO, or others. In some embodiments, a first communication chip 812 may be dedicated to wireless communications, and a second communication chip 812 may be dedicated to wired communications.

The computing device 800 may include battery/power circuitry 814. The battery/power circuitry 814 may include one or more energy storage devices (e.g., batteries or capacitors) and/or circuitry for coupling components of the computing device 800 to an energy source separate from the computing device 800 (e.g., AC line power).

The computing device 800 may include a display device 806 (or corresponding interface circuitry, as discussed above). The display device 806 may include any visual indicators, such as a heads-up display, a computer monitor, a projector, a touchscreen display, a liquid crystal display (LCD), a light-emitting diode display, or a flat panel display, for example.

The computing device 800 may include an audio output device 808 (or corresponding interface circuitry, as discussed above). The audio output device 808 may include any device that generates an audible indicator, such as speakers, headsets, or earbuds, for example.

The computing device 800 may include an audio input device 818 (or corresponding interface circuitry, as discussed above). The audio input device 818 may include any device that generates a signal representative of a sound, such as microphones, microphone arrays, or digital instruments (e.g., instruments having a musical instrument digital interface (MIDI) output).

The computing device 800 may include a GPS device 816 (or corresponding interface circuitry, as discussed above). The GPS device 816 may be in communication with a satellite-based system and may receive a location of the computing device 800, as known in the art.

The computing device 800 may include another output device 810 (or corresponding interface circuitry, as discussed above). Examples of the other output device 810 may include an audio codec, a video codec, a printer, a wired or wireless transmitter for providing information to other devices, or an additional storage device.

The computing device 800 may include another input device 820 (or corresponding interface circuitry, as discussed above). Examples of the other input device 820 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 800 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 800 may be any other electronic device that processes data.

### Selected Examples

The following paragraphs provide various examples of the embodiments disclosed herein.

Example 1 provides an apparatus, including a computer processor for executing computer program instructions; and a non-transitory computer-readable memory storing computer program instructions executable by the computer processor to perform operations including receiving an input at a selected device; generating, at an encoder, one or more tokens based on the input; storing the tokens at the selected device; receiving a trigger to initiate communication with a multimodal LLM; transmitting at least a subset of the tokens to an inference dispatcher; and determining, at the inference dispatcher, distribution of the tokens.

Example 2 provides the apparatus of example 1, where the input includes an audio signal, where the selected device is an audio offload engine, and where the encoder is configured to generate a plurality of audio tokens based on the audio signal.

Example 3 provides the apparatus of example 1 or 2, where storing the tokens at the selected device includes buffering the tokens in a memory, where the memory is configured to store tokens representing at least about an hour of the input.

Example 4 provides the apparatus of example 3, where transmitting at least a subset of the tokens includes transmitting the tokens in the memory.

Example 5 provides the apparatus of any of examples 1- 4, where transmitting at least a subset of the tokens includes transmitting tokens corresponding to a selected time period preceding the trigger.

Example 6 provides the apparatus of any one of examples 1-5, where the inference dispatcher is further configured to select from a plurality of multimodal LLMs for inference based on at least one of system configuration and resource availability.

Example 7 provides the apparatus of any one of examples 1-6, the operations further including preprocessing the tokens to include metadata for facilitating search and retrieval.

Example 8 provides the apparatus of any one of examples 1-7, where the tokens are stored in a buffer implemented in at least one of: static random-access memory (SRAM), dynamic random-access memory (DRAM), and persistent storage.

Example 9 provides the apparatus of any one of examples 1-8, where the input includes one of video, images, and text, and where the selected device is one of a neural video unit, a graphics processing unit, and a central processing unit.

Example 10 provides the apparatus of any one of examples 1-9, where the encoder is implemented in a hardware subsystem configured for low-power, continuous tokenization of the input.

Example 11 provides the apparatus of any one of examples 1-10, where receiving the trigger includes receiving the trigger after accumulation of tokens corresponding to a long-context window of the input.

Example 12 provides one or more non-transitory computer-readable media storing instructions executable to perform operations, the operations including receiving an input at a selected device; generating, at an encoder, one or more tokens based on the input; storing the tokens at the selected device; receiving a trigger to initiate communication with a multimodal LLM; transmitting at least a subset of the tokens to an inference dispatcher; and determining, at the inference dispatcher, distribution of the tokens.

Example 13 provides the one or more non-transitory computer-readable media of example 12, where the input includes an audio signal, where the selected device is an audio offload engine, and where the encoder is configured to generate a plurality of audio tokens based on the audio signal.

Example 14 provides the one or more non-transitory computer-readable media of example 12 or 13, where storing the tokens at the selected device includes buffering the tokens in a memory, where the memory is configured to store tokens representing at least about an hour of the input.

Example 15 provides the one or more non-transitory computer-readable media of example 14, where transmitting at least a subset of the tokens includes transmitting the tokens in the memory.

Example 16 provides the one or more non-transitory computer-readable media of example 14 or 15, where transmitting at least a subset of the tokens includes transmitting tokens corresponding to a selected time period preceding the trigger.

Example 17 provides the one or more non-transitory computer-readable media of any one of examples 12-16, where the inference dispatcher is further configured to select from a plurality of multimodal LLMs for inference based on at least one of system configuration and resource availability.

Example 18 provides the one or more non-transitory computer-readable media of any one of examples 12-17, the operations further including preprocessing the tokens to include metadata for facilitating search and retrieval.

Example 19 provides the one or more non-transitory computer-readable media of any one of examples 12-18, where the tokens are stored in a buffer implemented in at least one of: static random-access memory (SRAM), dynamic random-access memory (DRAM), and persistent storage.

Example 20 provides the one or more non-transitory computer-readable media of any one of examples 12-19, where the input includes one of video, images, and text, and where the selected device is one of a neural video unit, a graphics processing unit, and a central processing unit.

Example 21 provides the one or more non-transitory computer-readable media of any one of examples 12-20, where the encoder is implemented in a hardware subsystem configured for low-power, continuous tokenization of the input.

Example 22 provides the one or more non-transitory computer-readable media of any one of examples 12-21, where receiving the trigger includes receiving the trigger after accumulation of tokens corresponding to a long-context window of the input.

Example 23 provides a computer-implemented method, including receiving an input at a selected device; generating, at an encoder, one or more tokens based on the input; storing the tokens at the selected device; receiving a trigger to initiate communication with a multimodal LLM; transmitting at least a subset of the tokens to an inference dispatcher; and determining, at the inference dispatcher, distribution of the tokens.

Example 24 provides the computer-implemented method of example 23, where the input includes an audio signal, where the selected device is an audio offload engine, and where the encoder is configured to generate a plurality of audio tokens based on the audio signal.

Example 25 provides the computer-implemented method of example 23 or 24, where storing the tokens at the selected device includes buffering the tokens in a memory, where the memory is configured to store tokens representing at least about an hour of the input.

Example 26 provides the computer-implemented method of example 25, where transmitting at least a subset of the tokens includes transmitting the tokens in the memory.

Example 27 provides the computer-implemented method of example 25 or 26, where transmitting at least a subset of the tokens includes transmitting tokens corresponding to a selected time period preceding the trigger.

Example 28 provides the computer-implemented method of any one of examples 23-27, where the inference dispatcher is further configured to select from a plurality of multimodal LLMs for inference based on at least one of system configuration and resource availability.

Example 29 provides the computer-implemented method of any one of examples 23-28, further including preprocessing the tokens to include metadata for facilitating search and retrieval.

Example 30 provides the computer-implemented method of any one of examples 23-29, where the tokens are stored in a buffer implemented in at least one of: static random-access memory (SRAM), dynamic random-access memory (DRAM), and persistent storage.

Example 31 provides the computer-implemented method of any one of examples 23-30, where the input includes one of video, images, and text, and where the selected device is one of a neural video unit, a graphics processing unit, and a central processing unit.

Example 32 provides the computer-implemented method of any one of examples 23-31, where the encoder is implemented in a hardware subsystem configured for low-power, continuous tokenization of the input.

Example 33 provides the computer-implemented method of any one of examples 23-32, where receiving the trigger includes receiving the trigger after accumulation of tokens corresponding to a long-context window of the input.

Example 34 provides a method comprising: receiving an audio input at an audio offload engine; generating a plurality of audio tokens at an encoder; storing the audio tokens in token buffer; analyzing the tokens at the selected device; receiving a trigger to initiate conversation with a multimodal LLM; transmitting the tokens to the multimodal LLM Inference Dispatcher; and determining, at the dispatcher, the distribution of the audio tokens to one or more multimodal LLMs for further processing.

Example 35 provides a method comprising: receiving an audio input at the audio offload engine; generating a plurality of audio tokens at the encoder; buffering the tokens; receiving a trigger at the trigger; activating the switch; transmitting the tokens through the communication link; and determining, at the multimodal LLM inference dispatcher, distribution of the tokens for inference.

Example 36 provides the apparatus, the one or more non-transitory computer-readable media, and/or the method of any of the examples herein, wherein the audio offload engine is a specific component in an SoC dedicated to processing audio at low power.

Example 37 provides the apparatus, the one or more non-transitory computer-readable media, and/or the method of any of the examples herein, wherein the input comprises one or more of audio, video, images, and text, and wherein: an audio encoder generates a plurality of audio tokens based on the audio, a video encoder generates a plurality of video tokens based on the video, an image encoder generates a plurality of image tokens based on the images, and a text encoder generates a plurality of text tokens based on the text.

### Variations and other notes

Although the operations of the example method shown in and described with reference to FIGS. 1-8 are illustrated as occurring once each and in a particular order, it will be recognized that the operations may be performed in any suitable order and repeated as desired. Additionally, one or more operations may be performed in parallel. Furthermore, the operations illustrated in FIGS. 1-8 may be combined or may include more or fewer details than described.

The various implementations described herein may refer to artificial intelligence, machine learning, and deep learning. Machine learning may be a subset of artificial intelligence. Deep learning may be a subset of machine learning. In cases where a deep learning model is mentioned, if suitable for a particular application, a different kind of machine learning model may be used instead. In cases where a deep learning model is mentioned, if suitable for a particular application, a different kind of artificial intelligence model may be used instead. In cases where a deep learning model, machine learning model, or an artificial intelligence model is mentioned, if suitable for a particular application, a digital signal processing system may be used instead.

Various models can be trained using training data, or in an unsupervised manner. Parameters of the model (e.g., parameters in background models, foreground object models, neural networks, etc.) may be updated during the training process, or through unsupervised learning.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

For the purposes of the present disclosure, "A is less than or equal to a first threshold" is equivalent to "A is less than a second threshold" provided that the first threshold and the second thresholds are set in a manner so that both statements result in the same logical outcome for any value of A. For the purposes of the present disclosure, "B is greater than a first threshold" is equivalent to "B is greater than or equal to a second threshold" provided that the first threshold and the second thresholds are set in a manner so that both statements result in the same logical outcome for any value of B.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

1. An apparatus, comprising:
a computer processor for executing computer program instructions; and
a non-transitory computer-readable memory storing computer program instructions executable by the computer processor to perform operations comprising:
receiving an input at a selected device;
generating, at an encoder, one or more tokens based on the input;
storing the tokens at the selected device;
receiving a trigger to initiate communication with a multimodal LLM;
transmitting at least a subset of the tokens to an inference dispatcher; and
determining, at the inference dispatcher, distribution of the tokens.

2. The apparatus of claim 1, wherein the input comprises an audio signal, wherein the selected device is an audio offload engine, and wherein the encoder is configured to generate a plurality of audio tokens based on the audio signal.

3. The apparatus of any of claims 1-2, wherein storing the tokens at the selected device comprises buffering the tokens in a memory, wherein the memory is configured to store tokens representing at least about an hour of the input.

4. The apparatus of claim 3, wherein transmitting at least a subset of the tokens comprises transmitting the tokens in the memory.

5. The apparatus of any of claims 1-4, wherein transmitting at least a subset of the tokens comprises transmitting tokens corresponding to a selected time period preceding the trigger.

6. The apparatus of any of claims 1-5, wherein the inference dispatcher is further configured to select from a plurality of multimodal LLMs for inference based on at least one of system configuration and resource availability.

7. The apparatus of any of claims 1-6, the operations further comprising preprocessing the tokens to include metadata for facilitating search and retrieval.

8. The apparatus of any of claims 1-7, wherein the tokens are stored in a buffer implemented in at least one of: static random-access memory (SRAM), dynamic random-access memory (DRAM), and persistent storage.

9. The apparatus of claim 1, wherein the input comprises one or more of audio, video, images, and text, and wherein:
an audio encoder generates a plurality of audio tokens based on the audio,
a video encoder generates a plurality of video tokens based on the video,
an image encoder generates a plurality of image tokens based on the images, and
a text encoder generates a plurality of text tokens based on the text.

10. The apparatus of claim 1, wherein the encoder is implemented in a hardware subsystem configured for low-power, continuous tokenization of the input.

11. The apparatus of claim 1, wherein receiving the trigger includes receiving the trigger after accumulation of tokens corresponding to a long-context window of the input.

12. One or more non-transitory computer-readable media storing instructions executable to perform operations, the operations comprising:
receiving an input at a selected device;
generating, at an encoder, one or more tokens based on the input;
storing the tokens at the selected device;
receiving a trigger to initiate communication with a multimodal LLM;
transmitting at least a subset of the tokens to an inference dispatcher; and
determining, at the inference dispatcher, distribution of the tokens.

13. The one or more non-transitory computer-readable media of claim 12, wherein the input comprises an audio signal, wherein the selected device is an audio offload engine, and wherein the encoder is configured to generate a plurality of audio tokens based on the audio signal.

14. The one or more non-transitory computer-readable media of claim 12, wherein storing the tokens at the selected device comprises buffering the tokens in a memory, wherein the memory is configured to store tokens representing at least about an hour of the input.

15. A computer-implemented method, comprising:
receiving an input at a selected device;
generating, at an encoder, one or more tokens based on the input;
storing the tokens at the selected device;
receiving a trigger to initiate communication with a multimodal LLM;
transmitting at least a subset of the tokens to an inference dispatcher; and
determining, at the inference dispatcher, distribution of the tokens.
